# EUROPÄISCHE PATENTSCHRIFT

(11) **EP 4 294 873 B1**
(45) Veröffentlichungstag und Bekanntmachung des Hinweises auf die Patenterteilung: **16.10.2024**
(21) Anmeldenummer: 21706552.3
(22) Anmeldetag: 17.02.2021
(51) Int. Cl.: C08K 3/38, C08L 1/24, C08L 3/02, C08L 67/02, C08L 67/04, C08L 83/04, C08L 31/04

(54) **ADDITIVE ENTHALTENDE BIOPOLYMERZUSAMMENSETZUNGEN**
ADDITIVE-CONTAINING BIOPOLYMER COMPOSITIONS
COMPOSITIONS DE BIOPOLYMÈRES CONTENANT UN ADDITIF

(43) Veröffentlichungstag der Anmeldung: 27.12.2023
(73) Patentinhaber: Wacker Chemie AG, 81671 München (DE)
(72) Erfinder: FUHRMANN, Oliver, 83352 Altenmarkt (DE); LAMPRECHT, Manuela, 83352 Altenmarkt (DE); WEBER, Karl, 84508 Burgkirchen (DE); WEISSENBACHER, Angelika, 84375 Kirchdorf am Inn (DE)
(74) Vertreter: Belz, Ferdinand
(86) Internationale Anmeldenummer: PCT/EP2021/053891
(87) Internationale Veröffentlichungsnummer: WO 2022/174894

(56) Entgegenhaltungen:
- US-A1- 2005 004 296
- US-A1- 2017 313 912
- US-B2- 7 666 946

## Beschreibung

Die Erfindung betrifft Zusammensetzungen enthaltend Biopolymere und Additive.

Als Biopolymere werden solche Polymere bezeichnet, die ganz oder teilweise aus nachwachsenden Rohstoffen hergestellt sind und/oder biologisch abbaubar sind. Sie sollen erdölbasierte Kunststoffe ersetzen. Im Allgemeinen sind die Verarbeitungsbedingungen bei Biokunststoffen erschwert und die mechanischen Eigenschaften oft nicht ausreichend.

Aus US 2017/313912 A1 ist eine Zusammensetzung aus Polymilchsäure (PLA), Polyvinylacetat und Weichmacher für Filmanwendungen bekannt.

In US 2005/0004296 A1 wird ein Verfahren zur Herstellung eines Organopolysiloxangranulats und die Verwendung des Organopolysiloxangranulats als Additiv in thermoplastischen Kunststoffen beschrieben.

Es bestand die Aufgabe, durch Zugabe von Additiven die Oberflächeneigenschaften, die Mechanik und die Verarbeitung von Biopolymeren zu optimieren oder zu verbessern.

Die Aufgabe wird durch die Erfindung gelöst.

Gegenstand der Erfindung sind Zusammensetzungen enthaltend
(A) 65 bis 99,4 Gew.-%, vorzugsweise 85 bis 90 Gew.-%,
   Biopolymere ausgewählt aus der Gruppe von
   Polymilchsäure (PLA),
   Polybutylensuccinat (PBS),
   Polybutylensuccinat Adipat (PBSA),
   Thermoplastische Stärke (TPS),
   Polyhydroxyalkanoat (PHA),
   Polybutylenadipat-Terephthalat (PBAT),
   Polybutylensebacinat-Terephthalat (PBST),
   Polyhydroxybutyrat (PHB),
   Polycaprolacton (PCL),
   und Zellophan (CA),
(B) 0,5 bis 30 Gew.-%, vorzugsweise 10 bis 15 Gew.-%,
   Homopolymere, Copolymere oder Terpolymere auf Basis von Vinylacetat und
(C) 0,1 bis 5 Gew.-%, vorzugsweise 1 bis 2 Gew.-%, Organopolysiloxangranulate enthaltend
   (1) 100 Gew.-teile mindestens eines Polyorganosiloxans aus Einheiten der allgemeinen Formel

      RᵣSiO_{(4-r/2)}

      wobei R gleich oder verschieden ist und einen substituierten oder unsubstituierten Kohlenwasserstoffrest und r 0, 1, 2 oder 3 bedeutet, mit der Maßgabe, dass der durchschnittliche Zahlenwert von r in einem Bereich von 1,9 bis 2,1 liegt,
   (2) 1 bis 200 Gew.-teile eines verstärkenden oder nicht-verstärkenden Füllstoffs oder deren Gemische
   (3) 0,01 bis 20 Gew.-teile eines Borsäure enthaltenden Additivs zur Herstellung des Granulats und
   (4) gegebenenfalls weitere Hilfsstoffe ausgewählt aus der Gruppe von Verarbeitungshilfsmitteln, Weichmacher, Pigmente und Stabilisatoren,
   wobei die Organopolysiloxangranulate eine Teilchengröße von 1 bis 100 mm aufweisen,
   mit der Maßgabe, dass die Gew.-% der Komponenten (A), (B) und (C) jeweils bezogen auf das Gesamtgewicht der Zusammensetzungen sind.

Gegenstand der Erfindung ist weiterhin ein Verfahren zur Herstellung der Zusammensetzungen durch Vermischen von
(A) 65 bis 99,4 Gew.-%, vorzugsweise 85 bis 90 Gew.-%,
   Biopolymere ausgewählt aus der Gruppe von
   Polymilchsäure (PLA),
   Polybutylensuccinat (PBS),
   Polybutylensuccinat Adipat (PBSA),
   Thermoplastische Stärke (TPS),
   Polyhydroxyalkanoat (PHA),
   Polybutylenadipat-Terephthalat (PBAT),
   Polybutylensebacinat-Terephthalat (PBST),
   Polyhydroxybutyrat (PHB),
   Polycaprolacton (PCL),
   und Zellophan (CA),
      mit
(B) 0,5 bis 30 Gew.-%, vorzugsweise 10 bis 15 Gew.-%, Homopolymere, Copolymere oder Terpolymere auf Basis von Vinylacetat und
(C) 0,1 bis 5 Gew.-%, vorzugsweise 1 bis 2 Gew.-%, Organopolysiloxangranulate enthaltend
   (5) 100 Gew.-teile mindestens eines Polyorganosiloxans aus Einheiten der allgemeinen Formel

      RᵣSiO_{(4-r/2)}

      wobei R gleich oder verschieden ist und einen substituierten oder unsubstituierten Kohlenwasserstoffrest und r 0, 1, 2 oder 3 bedeutet, mit der Maßgabe, dass der durchschnittliche Zahlenwert von r in einem Bereich von 1,9 bis 2,1 liegt,
   (6) 1 bis 200 Gew.-teile eines verstärkenden oder nicht-verstärkenden Füllstoffs oder deren Gemische
   (7) 0,01 bis 20 Gew.-teile eines Borsäure enthaltenden Additivs zur Herstellung des Granulats und
   (8) gegebenenfalls weitere Hilfsstoffe ausgewählt aus der Gruppe von Verarbeitungshilfsmitteln, Weichmacher, Pigmente und Stabilisatoren,
   wobei die Organopolysiloxangranulate eine Teilchengröße von 1 bis 100 mm aufweisen,
mit der Maßgabe, dass die Gew.-% der Komponenten (A), (B) und (C) jeweils bezogen auf das Gesamtgewicht der Zusammensetzungen sind.

Die Biopolymere (A) sind käuflich erwerblich, wie
Polymilchsäure (PLA) bei Nature Works und Total-Corbion,
Polybutylensuccinat (PBS) bei MCPP-Europe,
Polybutylensuccinat Adipat (PBSA) bei MCPP-Europe,
Thermoplastische Stärke (TPS) bei Rodenburg Biopolymers,
Polyhydroxyalkanoat (PHA) bei Biomer und Danimer Scientific
Polybutylenadipat-Terephthalat (PBAT) bei BASF,
Polybutylensebacinat-Terephthalat (PBST) bei BASF
Polyhydroxybutyrat (PHB) bei Biomer und Danimer Scientific
Polycaprolacton (PCL) bei DOW-Du Pont und Perstorp
und Zellophan (CA) bei FKuR.

Vorzugsweise werden als Biopolymere Polymilchsäure (PLA) und Polybutylensuccinat (PBS) eingesetzt.

Die als Additive (B) eingesetzten Homopolymere, Copolymere oder Terpolymere auf Basis von Vinylacetat sind vorzugsweise solche ausgewählt aus der Gruppe der Homopolymere aus Vinylacetat,
Copolymere aus Vinylacetat und Ethylen,
Copolymere aus Vinylacetat und Vinyllaurat,
Terpolymere aus Vinylacetat, Ethylen und Versaticsäureester,
Terpolymere aus Vinylacetat, Ethylen und Acrylat,
Terpolymere aus Vinylacetat, Vinyllaurat und Acrylat
und deren Mischungen.

Die Homo-, Co- und Terpolymere auf Basis von Vinylacetat sind käuflich erwerblich. So sind Homo- und Copolymere von Vinylacetat unter dem Handelsnamen VINNEX^{®} bei der Wacker Chemie AG käuflich erwerblich.

Bevorzugt werden als Additive (B) Homopolymer aus Vinylacetat und Copolymere aus Vinylacetat und Ethylen eingesetzt.

Die Additive (B) können in Form von feinem Pulver (bevorzugt d₅₀ ca. 100µm), sphärischen Kugeln (bevorzugt Durchmesser max. 2 mm), gebrochenen Flakes (unregelmäßige Form) oder als Granulate (bevorzugt Durchmesser bis ca. 4 mm) eingesetzt werden.

Als Additive (C) werden Organopolysiloxangranulate eingesetzt, wie sie in US 2005/0004296 A1, insbesondere Paragraph [0009] bis [0054], beschrieben sind. Beispiele für Kohlenwasserstoffreste R sind Alkylreste, wie beispielsweise Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie beispielsweise n-Hexylrest, Heptylreste, wie beispielsweise n-Heptylrest, Octylreste, wie der n-Octylrest und iso-Octylreste, wie beispielsweise 2,2,4-Trimethylpentylrest, Nonylreste, wie beispielsweise n-Nonylrest, Decylreste, wie beispielsweise n-Decylrest, Dodecylreste, wie beispielsweise n-Dodecylrest, Octadecylreste, wie beispielsweise n-Octadecylrest; Cycloalkylreste, wie beispielsweise Cyclopentyl-, Cyclohexyl-, Cycloheptylreste und Methylcyclohexylreste; Arylreste, wie beispielsweise Phenyl-, Biphenyl-, Naphtyl- und Anthryl-und Phenanthrylrest; Alkarylreste, wie beispielsweise o-, m-, p-Tolylreste, Xylylreste und Ethylphenylreste; Aralkylreste, wie beispielsweise Benzylrest, der α- und der β-Phenylethylrest.

Beispiele für substituierte Kohlenwasserstoffreste R sind halogenierte Alkylreste, wie beispielsweise 3-Chlorpropyl-, der 3,3,3-Trifluorpropyl- und der Perfluorhexylethylrest, halogenierte Arylreste, wie beispielsweise p-Chlorphenyl- und der p-Chlorbenzylrest.

Bevorzugt handelt es sich bei Rest R um Wasserstoffatom- und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

In einer weiteren bevorzugten erfindungsgemäßen Ausführungsform handelt es sich bei Rest R um Alkenylreste mit 2 bis 8 Kohlenstoffatomen, besonders bevorzugt um den Vinylrest.

Bei den Polyorganosiloxanen (1) handelt es sich vorzugsweise um hochviskose Substanzen. Bevorzugt weisen die Polyorganosiloxane (1) bei 25°C eine Viskosität von 1.000.000 bis
100.000.000 mm²/s (bestimmt nach DIN 1342-2, Ausgabe 2003-11) auf.

Die Polyorganosiloxane (1) sind vorzugsweise Diorganopolysiloxane, die als Endgruppen Trialkylsiloxygruppen, Trimethylsiloxygruppen, Dimethylhydroxylsiloxygruppen oder Dimethylvinylsiloxygruppen aufweisen.

Bei den Polyorganosiloxanen (1) handelt es sich vorzugsweise um durch Trialkylsiloxygruppen, bevorzugt Trimethylsiloxygruppen, endblockierte Diorganopolysiloxane aus 70 bis 100%, bevorzugt 90 bis 100%, Dimethylsiloxaneinheiten und 0 bis 30%, bevorzugt 0 bis 10%, Alkenylmethylsiloxaneinheiten, bevorzugt Vinylmethylsiloxaneinheiten.

Es kann eine Art von Polyorganosiloxan (1), es kann auch ein Gemisch aus mindestens zwei verschiedenen Arten von Polyorganosiloxan (1) eingesetzt werden.

Beispiele für verstärkende Füllstoffe (2) sind pyrogene oder gefällte Kieselsäuren mit BET-Oberflächen von mindestens 50 m²/g.

Die genannten Kieselsäurefüllstoffe können hydrophilen Charakter haben oder nach bekannten Verfahren hydrophobiert sein. Sie werden bevorzugt eingesetzt.

Beispiele für nichtverstärkende Füllstoffe (2) sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, Polytetrafluorethylenpulver. Des Weiteren können als Füllstoffe faserige Komponenten, wie Glasfasern und Kunststofffasern, eingesetzt werden. Die BET-Oberfläche dieser Füllstoffe liegt vorzugsweise unter 50 m²/g.

Die erfindungsgemäßen Organopolysiloxangranulate enthalten Füllstoff (2) in Mengen von vorzugsweise 1 bis 200 Gew.-teilen, besonders bevorzugt 30 bis 100 Gew.-teilen, jeweils bezogen auf 100 Gewichtsteile Polyorganosiloxan (1).

Das Borsäure enthaltende Additiv (3) ist in EP 1 028 140 A1 beschrieben, deren diesbezügliche Offenbarung Teil der vorliegenden Anmeldung sein soll, und ermöglicht es, ein voll rieselfähiges Organopolysiloxangranulat herzustellen. Das Additiv (3) besteht vorzugsweise im Wesentlichen aus Borsäure und Wasser, welches bevorzugt entionisiert oder von höherer Reinheit ist, sowie gegebenenfalls Fettsäuresalzen und wird in Mengen von vorzugsweise 0,01 bis 20 Gew.-teilen, bevorzugt 0,1 bis 4 Gew.-teilen und besonders bevorzugt 0,1 bis 2 Gew.-teilen, jeweils bezogen auf 100 Gew.-teile Polyorganosiloxan (1), dem Polyorganosiloxan (1) zugesetzt.

Das Wasser dient als Lösungsmittel für die Borsäure und wird vorzugsweise vor der Granulatbildung entfernt.

Bei den gegebenenfalls im Borsäureadditiv (3) enthaltenen Fettsäuresalzen handelt es sich vorzugsweise um die Salze der Metalle Al, Ba, Ca, Cd, Co, Cr, Cu, Fe, Li, Mg, Mn, Ni, Pb, Sn, Sr, Zn mit höheren Fett-, Harz- u. Naphthensäuren, wie Stearate, Palmitate, Oleate, Linoleate, Resinate, Laurate, Octanoate, Ricinoleate, 12-Hydroxystearate, Naphthenate, Tallate und dergleichen. Bevorzugt sind Fettsäuren mit mehr als 12 Kohlenstoffatomen bis 30 Kohlenstoffatomen, besonders bevorzugt sind Fettsäuren mit mehr als 16 Kohlenstoffatomen bis 26 Kohlenstoffatomen, wobei die Stearate besonders bevorzugt sind, insbesondere Calciumstearat. Fettsäuresalze sind in der Borsäureadditiv-Zusammensetzung in Mengen von vorzugsweise 0,1 bis 10 Gew.-%, bevorzugt 0,2 bis 6 Gew.-%, besonders bevorzugt 0,3 bis 4 Gew.-% enthalten.

Beispiele für Weichmacher, die als Komponente (4) im Organopolysiloxangranulat eingesetzt werden können, sind mit Trimethylsiloxygruppen oder Hydroxylgruppen terminierte

Dipolyorganosiloxane mit einer Viskosität von maximal 5.000 mm²/s bei 25°C oder auch Diphenylsilandiol. Die Dipolyorganosiloxane sind bevorzugt aus Dimethylsiloxaneinheiten und/oder Vinylmethylsiloxaneinheiten aufgebaut.

Nach Vereinigung der einzelnen Komponenten (1)-(4), vorzugsweise in einem Kneter, bei einer Temperatur von vorzugsweise 100-250°C, bevorzugt 120-200°C, wird die Zusammensetzung mit üblichen Granuliermitteln wie beispielsweise der Lochplatte und dem rotierenden Messer granuliert, und es wird ein voll rieselfähiges Granulat erhalten. Das resultierende Organopolysiloxangranulat weist eine Teilchengröße von 1 bis 100 mm, vorzugsweise 2 bis 50 mm auf. Bevorzugt hat das erfindungsgemäße Organopolysiloxangranulat eine typische zylindrische Granulatstruktur mit einem Durchmesser von bevorzugt 3 bis 10 mm, besonders bevorzugt von 4 bis 8 mm und einer Höhe von bevorzugt 2 bis 10 mm, besonders bevorzugt von 3 bis 8 mm.

Die Teilchengröße der Organopolysiloxangranulate bestimmt sich nach dem Durchmesser der verwendeten Lochplatte.

Organopolysiloxangranulate, die als Additive (C) eingesetzt werden, sind beispielsweise unter dem Handelsnamen GENIOPLAST^{®} bei der Wacker Chemie AG käuflich erwerblich.

Die erfindungsgemäßen Zusammensetzungen können zusätzlich zu den Bestandteilen (A) bis (C) noch weitere Bestandteile (D) enthalten, wie Füllstoffe, Pigmente, Stabilisatoren und Antioxidantien.

Als Füllstoffe können verstärkende und nicht verstärkende Füllstoffe eingesetzt werden.

Beispiele für verstärkende Füllstoffe, also Füllstoffe mit einer BET-Oberfläche von mindestens 50 m²/g, sind pyrogen hergestellte Kieselsäure, gefällte Kieselsäure oder Silicium-Aluminium-Mischoxide mit einer BET-Oberfläche von mehr als 50 m²/g. Die genannten Füllstoffe können hydrophobiert sein, beispielsweise durch Behandlung mit Organosilanen, -silazanen oder -siloxanen oder durch Veretherung von Hydroxylgruppen zu Alkoxygruppen.

Beispiele für nicht verstärkende Füllstoffe, also Füllstoffe mit einer BET-Oberfläche von weniger als 50 m²/g, sind Calciumcarbonat, Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Gips, Siliciumnitrid, Siliciumcarbid und Bornitrid.

Die erfindungsgemäßen Zusammensetzungen enthalten Füllstoffe in Mengen von vorzugsweise 5 bis 40 Gewichtsprozent, bevorzugt 10 bis 15 Gewichtsprozent.

Für die Compoundierung der erfindungsgemäßen Zusammensetzungen eignen sich vorzugsweise Doppelschneckenextruder, wie handelsübliche, gleichsinnig rotierende Doppelschneckenextruder. Vorzugsweise beträgt das Längen/Durchmesserverhältnis (L/D-Verhältnis) der Schnecken hierbei >30, besonders bevorzugt >40.

Die Temperaturen bei der Einarbeitung der Additive (B) und (C) in die Biopolymere richten sich nach der Schmelze des Biopolymers. Dabei dürfen die empfohlenen Temperaturen nicht überschritten werden. Es werden vorzugsweise Temperaturen von 170 bis 220°C, bevorzugt von 175 bis 210°C, bei der Einarbeitung der Additive (B) und (C) in die Biopolymere verwendet. Nach Einarbeitung bei erhöhter Temperatur auf geeignetem Verarbeitungsequipment kann der erhaltene Compound mit konventionellen Techniken weiterverarbeitet werden, beispielsweise durch Spritzgießen, Blasformen, Formpressen oder Vakuumtiefziehen, um entsprechende Kunststoffe herzustellen.

Die Zugabe von Additiv (B) hat den Vorteil, dass es mit den Biopolymeren, insbesondere mit Polymilchsäure (PLA), kompatibel ist. Darüber hinaus ermöglicht Additiv (B) die Herstellung von leistungsfähigen Polymerblends aus Polymilchsäure (PLA), anderen Biopolyestern und Stärke in Verbindung mit organischen und anorganischen Füllstoffen. Der Einsatz der Additive (B) in Kombination mit PLA eignet sich besonders für Blasfolienextrusion und Spritzgussanwendungen.

Die Zugabe von Additiv (B) zu Polybutylensuccinat (PBS) kann die Rekristallisationsrate von PBS deutlich reduzieren und dadurch dessen Eigenschaften konstant halten. Über den Anteil des ausgewählten Additivtyps (B) sowie durch Beimischung von Polymilchsäure (PLA) lässt sich die Flexibilität oder Steifigkeit nach Bedarf einstellen. Darüber hinaus können höhere Anteile an organischen oder anorganischen Füllstoffen eingesetzt werden, ohne physikalische Eigenschaften negativ zu beeinflussen.

Aber erst eine Kombination von Additiv (B) mit Additiv (C) resultiert in einer deutlich besseren Verarbeitbarkeit von Biopolymeren. Des Weiteren weisen Biokunststoffe, die mit Hilfe einer Kombination von Additiv (B) und Additiv (C) verarbeitet werden, eine deutliche Verbesserung der Oberflächeneigenschaften und der mechanischen Kennwerte auf als Biokunststoffe, die nur mit Additiv (B) oder nur mit Additiv (C) verarbeitet werden. Die Kombination beider Additive (B) und (C) bewirkt hierbei einen synergistischen Effekt.

Durch Verwendung der erfindungsgemäßen Kombination beider Additive (B) und (C) in Biokunststoffen lassen sich Formteile und Folien mit besseren mechanischen Eigenschaften, bzw. besseren Oberflächeneigenschaften herstellen, als Formteile und Folien von Biokunststoffen die unter Verwendung von nur jeweils einem Additiv (B) oder (C) hergestellt werden.

### Beispiele

### 1. Herstellung der Zusammensetzungen 1 bis 18

18 Compounds wurden auf einem KraussMaffei Berstorff ZE-25 Doppelschneckenextruder mit einem Länge-/Durchmesserverhältnis von 47 und einem Schneckendurchmesser von 25 mm bei einer Temperatur von 185°C, einer Schneckendrehzahl von 250 U/min und einem Durchsatz von 10 kg/h compoundiert. Die Zusammensetzungen der 18 Compounds sind in der nachfolgenden Liste, bezeichnet mit Tabelle 1, aufgeführt. Die Compoundierbedingungen der relevanten Compounds sind in der Tabelle 2 aufgeführt. Dazu wurden alle Granulatbestandteile zu einem Dry-Blend gemischt und der Dry-Blend gravimetrisch in den Einzugsbereich des Extruders dosiert. Ebenso wurden alle pulverförmigen Bestandteile zu einem Dry-Blend gemischt und dieser Dry-Blend ebenfalls gravimetrisch in den Einzugsbereich des Extruders dosiert. Das resultierende Extrudat wurde mit einer UWG granuliert und gekühlt.

**Tabelle 1: Zusammensetzungen 1 bis 18**

| **Zusammensetzung** | **1** | **2** | **3** | **4** | **5** | **6** | **7** | **8** | **9** | **10** | **11** | **12** | **13** | **14** | **15** | **16** | **17** | **18** |
|---|---|---|---|---|---|---|---|---|---|---|---|---|---|---|---|---|---|---|
| Bestandteile | | | | | | | | | | | | | | | | | | |
| Ingeo^{™} PLA 4043 D (Biopolymer A) | 100 | 85 | 85 | 85 | 90 | 90 | 90 | | | | | | | | 100 | 100 | | |
| BioPBS^{™} FZ 91 PM (Biopolymer A) | | | | | | | | 100 | 90 | 90 | 90 | 90 | 90 | 90 | | | 100 | 100 |
| VINNEX^{®} 2504 (Additiv B) | | 15 | 15 | 15 | | | | | 10 | 10 | 10 | | | | | | | |
| VINNEX^{®} 2525 (Additiv B) | | | | | 10 | 10 | 10 | | | | | 10 | 10 | 10 | | | | |
| GENIOPLAST^{®} Pellet P+ (Additiv C) | | | 1 | 2 | | 1 | 2 | | | | | | | | 1 | 2 | | |
| GENIOPLAST^{®} Pellet S (Additiv C) | | | | | | | | | | 1 | 2 | | 1 | 2 | | | 1 | 2 |
| Omyacarb^{®} 40GU (CaCO₃) | | | | | | | | 15 | 15 | 15 | 15 | 15 | 15 | 15 | | | 15 | 15 |
| Total [Gew.-teile] | 100 | 100 | 101 | 102 | 100 | 101 | 102 | 115 | 115 | 116 | 117 | 115 | 116 | 117 | 101 | 102 | 116 | 117 |

| | |
|---|---|
| Ingeo^{™} PLA 4043 D | Polymilchsäure (PLA), Handelsname Ingeo^{™} Biopolymer 4043 D, Nature Works |
| BioPBS^{™} FZ 91 PM | Polybutylensuccinat (PBS), Handelsname BioPBS^{™} FZ 91 PM, Mitsubishi Chemical Performance Polymers (MCPP) |
| VINNEX^{®} 2504 | Vinylacetat-Ethylen-Copolymer, Handelsname VINNEX^{®} 2504, Wacker Chemie AG |
| VINNEX^{®} 2525 | Homopolymer von Vinylacetat, Handelsname VINNEX^{®} 2525, Wacker Chemie AG |
| GENIOPLAST^{®} Pellet P+ | Organopolysiloxangranulat, Handelsname GENIOPLAST^{®} Pellet P Plus, Wacker Chemie AG |
| GENIOPLAST^{®} Pellet S | Organopolysiloxangranulat, Handelsname GENIOPLAST^{®} Pellet S, Wacker Chemie AG |
| Omyacarb 40GU | Calciumcarbonat, Handelsname Omyacarb^{®} 40GU, Omya GmbH |

**Tabelle 2: Compoundierung der Zusammensetzungen (siehe 1. Herstellung der Zusammensetzungen)**

| **Zusammensetzung** | **1** | **2** | **3** | **5** | **6** |
|---|---|---|---|---|---|
| Rezepturbestandteile | Ingeo^{™} PLA 4043D | +15% VINNEX^{®} 2504 | +15% VINNEX^{®} 2504 | +10% VINNEX^{®} 2525 | +10% VINNEX^{®} 2525 |
| | | | +1% Pellet P+ | | +1% Pellet P+ |
| Extrusionstemp.[°C] | 185 | 185 | 185 | 185 | 185 |
| Ausstoßtemp. [°C) | 211 | 208 | 209 | 212 | 211 |
| Ausstoßdruck [bar] | 41 | 20 | 22 | 44 | 50 |
| Drehzahl [%] | 57 | 53 | 52 | 59 | 62 |
| Stromaufnahme [A] | 30,7 | 29,0 | 28,5 | 32,2 | 33,6 |

| **Zusammensetzung** | **8** | **9** | **10** | **12** | **13** |
|---|---|---|---|---|---|
| Rezepturbestandteile | BioPBS^{™} FZ91PM | +10% VINNEX^{®} 2504 | +10% VINNEX^{®} 2504 | +10% VINNEX^{®} 2525 | +10% VINNEX^{®} 2525 |
| | +15% CaCO₃ | | +1% Pellet S | | +1% Pellet S |
| Extrusionstemp.[°C] | 200 | 200 | 200 | 200 | 200 |
| Ausstoßtemp. [°C) | 229 | 226 | 226 | 227 | 226 |
| Ausstoßdruck [bar] | 56 | 37 | 35 | 55 | 52 |
| Drehzahl [%] | 65 | 60 | 59 | 51 | 49 |
| Stromaufnahme [A] | 35,4 | 32,6 | 31,8 | 27,9 | 27,0 |

In der Verarbeitung, während der Compoundierung, konnte die maximale Reduzierung des Drehmoments und der Stromaufnahme unter Einsatz beider Additive in Erfahrung gebracht werden.

Die Wirksamkeit wurde ermittelt und durchgeführt unter Vergleich der Biopolymere mit Zusatz der beiden Additive (B) und (C), d.h. mit Zusatz von 10 bzw. 15 Gew.-% VINNEX^{®} und 1 Gew.-% GENIOPLAST^{®} (Zusammensetzungen 3 und 6, sowie 10 und 13) zu den Biopolymeren, mit
- den reinen Biopolymeren ohne Additive, sowohl ohne Füllstoff (PLA, Zusammensetzung 1) als auch mit Füllstoff (PBS + CaCO₃, Zusammensetzung 8), und mit
- alleinigem Zusatz von Additiv (B) zu den Biopolymeren, wie 10 bzw. 15 Gew.-% VINNEX^{®} (Zusammensetzungen 2, 5 sowie 9 und 12).

### 2. Weiterverarbeitung

### 2.1 Spritzgussplatten

Aus den Compounds aus Tabelle 1 wurden auf einer Engel ES 600/125 Spritzgussmaschine bei 170-200°C, einer Einspritzrate von 30 -80 mm/s und einem Staudruck von 5,4 bar Spritzgussplatten mit glatter Oberfläche und Dimensionen von 8 cm × 12 cm angefertigt.

### 2.2 Fließspiralen

Des Weiteren wurden auf derselben Anlage Fließspiralen mit 1,6 mm Tiefe bei 160-190°C, einer Einspritzrate von 50 mm/s, einem Staudruck von 2 bar aus den Compounds hergestellt.

### 2.3 Blasfolien

Zusätzlich wurden Blasfolien zur Probekörper-Gewinnung hergestellt.

3. Herstellung von Probekörpern in Form von Pressplatten Von jedem Compound wurden Pressplatten in verschiedenen Stärken für 10 min. bei 180°C und einem von Druck 10 N/mm² gefertigt.

### 4. Untersuchung und Auswertung der Probekörper

Die Spritzgussplatten aus 2.1 und Pressplatten aus 3 wurden für 2 Tage im Normklima bei 23°C und 50% relativer Luftfeuchtigkeit gelagert.

### 4.1 COF: Gleiteigenschaft

COF nach ISO 8295 Kunststoffe - Folien und Bahnen - Bestimmung der Reibungskoeffizienten

Der COF wird ohne Einheit angegeben und wurde anhand der Pressplatten gemessen.

**Tabelle 3a:**

| **COF/ Rezepturen basierend auf BioPBS^{™} FZ 91 PM + 15% CaCO₃** | kinematisch |
|---|---|
| BioPBS^{™} FZ 91 PM + 15% CaCO₃ | 0,56 |
| + 10 % VINNEX^{®} 2504 | 0,62 |
| + 10 % VINNEX^{®} 2504+ 1 % GENIOPLAST^{®} Pellet S | 0,39 |
| + 10 % VINNEX^{®} 2525 | 0,52 |
| + 10 % VINNEX^{®} 2525 + 1 % GENIOPLAST^{®} Pellet S | 0,29 |

**Tabelle 3b:**

| **COF/ Rezepturen basierend auf Ingeo^{™} PLA 4043 D** | kinematisch |
|---|---|
| Ingeo^{™} PLA 4043 D | 0,50 |
| + 15 % VINNEX^{®} 2504 | 0,42 |
| + 15 % VINNEX^{®} 2504 + 1 % GENIOPLAST^{®} Pellet P Plus | 0,25 |
| + 10 % VINNEX^{®} 2525 | 0,47 |
| + 10 % VINNEX^{®} 2525 + 1 % GENIOPLAST^{®} Pellet P Plus | 0,34 |

Die Gleiteigenschaften konnten mit einer Kombination beider Additive (B) und (C) deutlich verbessert werden, indem der Gleitreibwiderstand reduziert wurde. Der Reibbeiwert (CoF-Wert) verringert sich. Der synergistische Effekt durch die Zugabe der Additive (B) und (C) ist deutlich erkennbar.

### 4.2 Fließspirale

### Fließspiralen wurden gemäß 2.2 hergestellt

**Tabelle 4a:**

| **Fließspirale/ Rezepturen basierend auf BioPBS^{™} FZ 91 PM + 15% CaCO₃** | Fließweg in cm |
|---|---|
| BioPBS^{™} FZ 91 PM + 15% CaCO₃ | 21,0 |
| + 10 % VINNEX^{®} 2504 | 27,3 |
| + 10 % VINNEX^{®} 2504+ 1 % GENIOPLAST^{®} Pellet S | 28,3 |
| + 10 % VINNEX^{®} 2525 | 24,1 |
| + 10 % VINNEX^{®} 2525 + 1 % GENIOPLAST^{®} Pellet S | 25,6 |

**Tabelle 4b:**

| **Fließspirale/ Rezepturen basierend auf Ingeo^{™} PLA 4043 D** | Fließweg in cm |
|---|---|
| Ingeo^{™} PLA 4043 D | 21,7 |
| + 15 % VINNEX^{®} 2504 | 39,5 |
| + 15 % VINNEX^{®} 2504 + 1 % GENIOPLAST^{®} Pellet P Plus | 40,1 |
| + 10 % VINNEX^{®} 2525 | 23,1 |
| + 10 % VINNEX^{®} 2525 + 1 % GENIOPLAST^{®} Pellet P Plus | 24,1 |

Sehr gute Ergebnisse konnten bei der Fließspirale erzielt werden. Durch Additiv (B) VINNEX^{®} wird der Fließweg deutlich verlängert, Additiv (C) GENIOPLAST^{®} bringt einen zusätzlichen Boost Effekt.

### 4.3 MFR: Schmelze-Massefließrate

Die Werte wurden nach DIN EN ISO 1133 am Granulat ermittelt.

**Tabelle 5:**

| **MFR/ Rezepturen basierend auf BioPBS^{™} FZ 91 PM + 15% CaCO₃** | 190°C/ 10,0kg in ccm/10min. |
|---|---|
| BioPBS^{™} FZ 91 PM + 15% CaCO₃ | 9,9 |
| + 10 % VINNEX^{®} 2504 | 36,8 |
| + 10 % VINNEX^{®} 2504+ 1 % GENIOPLAST^{®} Pellet S | 38,3 |
| + 10 % VINNEX^{®} 2525 | 15,5 |
| + 10 % VINNEX^{®} 2525 + 1 % GENIOPLAST^{®} Pellet S | 16,9 |

Das Verhalten der Schmelze-Massefließrate wird in PBS durch die Zugabe von beiden Additiven (B) und (C) verbessert.

### 4.4 Transparenz

Die Transparenz wird visuell anhand von Spritzgussplatten bewertet.

Die Transparenz an Spritzgussplatten wird durch VINNEX^{®} beeinflusst, die weitere Zugabe von GENIOPLAST^{®} weist kaum eine zusätzliche Trübung auf.

### 4.5 Kugelfall

Der Kugelfall entspricht der Norm DIN EN ISO 6272-2.

### Beschädigung in Noten 1-5:

| | |
|---|---|
| 1 | keine Spur |
| 2 | Delle |
| 3 | Riss Sprung |
| | Beschädigung minimal |
| 4 | Riss Sprung |
| | Beschädigung stark |
| 5 | Durchbruch |

**Tabelle 6a:**

| **Kugelfall/ Rezepturen basierend auf BioPBS^{™} FZ 91 PM + 15% CaCO₃** | Beschädigung in Note 1 - 5 bei 38 cm |
|---|---|
| BioPBS^{™} FZ 91 PM + 15% CaCO₃ | 5 |
| + 10 % VINNEX^{®} 2504 | 3,5 |
| + 10 % VINNEX^{®} 2504+ 1 % GENIOPLAST^{®} Pellet S | 3,5 |
| + 10 % VINNEX^{®} 2525 | 5 |
| + 10 % VINNEX^{®} 2525 + 1 % GENIOPLAST^{®} Pellet S | 2,5 |

**Tabelle 6b:**

| **Kugelfall/ Rezepturen basierend auf Ingeo^{™} PLA 4043 D** | Beschädigung in Note 1 - 5 bei 38 cm |
|---|---|
| Ingeo^{™} PLA 4043 D | 5 |
| + 15 % VINNEX^{®} 2504 | 2 |
| + 15 % VINNEX^{®} 2504 + 1 % GENIOPLAST^{®} Pellet P Plus | 2 |
| + 10 % VINNEX^{®} 2525 | 4,5 |
| + 10 % VINNEX^{®} 2525 + 1 % GENIOPLAST^{®} Pellet P Plus | 4 |

Der durchgeführte Kugelfalltest wies eine weniger stark beschädigte Oberfläche bei einer Kombination beider Additive auf.

### 4.6 Abriebtest

Der Abriebtest erfolgte nach DIN 53516 - Prüfung von Kautschuk und Elastomeren; Bestimmung des Abriebs.

**Tabelle 7a:**

| **Abrieb/ Rezepturen basierend auf BioPBS^{™} FZ 91 PM + 15% CaCO₃** | Abrieb in mg |
|---|---|
| BioPBS^{™} FZ 91 PM + 15% CaCO₃ | 117 |
| + 10 % VINNEX^{®} 2504 | 141 |
| + 10 % VINNEX^{®} 2504 + 1 % GENIOPLAST^{®} Pellet S | 130 |
| + 10 % VINNEX^{®} 2525 | 135 |
| + 10 % VINNEX^{®} 2525 + 1 % GENIOPLAST^{®} Pellet S | 140 |

**Tabelle 7b:**

| **Abrieb/ Rezepturen basierend auf Ingeo^{™} PLA 4043 D** | Abrieb in mg |
|---|---|
| Ingeo^{™} PLA 4043 D | 253 |
| + 15 % VINNEX^{®} 2504 | 381 |
| + 15 % VINNEX^{®} 2504 + 1 % GENIOPLAST^{®} Pellet P Plus | 242 |
| + 10 % VINNEX^{®} 2525 | 227 |
| + 10 % VINNEX^{®} 2525 + 1 % GENIOPLAST^{®} Pellet P Plus | 215 |

Je nach eingesetztem Additivtyp (B) VINNEX^{®} wird der Abrieb reduziert oder sogar verschlechtert, indem ein höherer Abrieb erfolgt. Eine Zugabe von Additiv (C) GENIOPLAST^{®} reduziert nicht nur den Abrieb, sondern gleicht den negativen Effekt von Additiv (B) bezüglich des Abriebs auch aus. Der synergistische Effekt durch die Zugabe der Additive (B) und (C) ist deutlich erkennbar.

### 4.7 Erichsen Scratch Test: Kratzbeständigkeit

Der Erichsen Scratch Test erfolgte nach PV3974 - Prüfung der Kratzbeständigkeit.

Es wurde mit einem Ritzhärteprüfgerät der Fa. Erichsen (Modell 430 P-I) auf den glatten Spritzgussplatten aus 2.1 Kratzer mit einer Kraft von 10 N bei einer Geschwindigkeit von 1000 mm/min appliziert.

Die Auswertung der Kratzer erfolgte in der Confocalmikroskopie über die Methodik Lichtmikroskopie.

**Tabelle 8a:**

| **Erichsen Scratch Test/ Rezepturen basierend auf BioPBS^{™} FZ 91 PM +15% CaCO₃** | Kratzertiefe delta z in µm |
|---|---|
| BioPBS^{™} FZ 91 PM + 15% CaCO₃ | 14,53 |
| + 10 % VINNEX^{®} 2504 | 23,11 |
| + 10 % VINNEX^{®} 2504 + 1 % GENIOPLAST^{®} Pellet S | 5,46 |
| + 10 % VINNEX^{®} 2525 | 12,34 |
| + 10 % VINNEX^{®} 2525 + 1 % GENIOPLAST^{®} Pellet S | 5,42 |

**Tabelle 8b:**

| **Erichsen Scratch Test/ Rezepturen basierend auf Ingeo^{™} PLA 4043 D** | Kratzertiefe delta z in µm |
|---|---|
| Ingeo^{™} PLA 4043 D | 7,15 |
| + 15 % VINNEX^{®} 2504 | 13,93 |
| + 15 % VINNEX^{®} 2504 + 1 % GENIOPLAST^{®} Pellet P Plus | 3,63 |
| + 10 % VINNEX^{®} 2525 | 8,5 |
| + 10 % VINNEX^{®} 2525 + 1 % GENIOPLAST^{®} Pellet P Plus | 6,59 |

Die Zugabe von Additiv (B) VINNEX^{®} in PLA und PBS wirkt sich negativ auf die Kratzertiefe aus. Dies kann durch die Zugabe von Additiv (C) GENIOPLAST^{®} nicht nur ausgeglichen, sondern deutlich verbessert werden, d.h. die Kratzbeständigkeit wird verbessert. Der synergistische Effekt durch die Zugabe der Additive (B) und (C) ist deutlich erkennbar. In diesem Fall kann eine Dosierung von 2 Gew.-% GENIOPLAST^{®} empfohlen werden.

### 4.8 Zugversuch

Der Zugversuch wurde mittels DIN EN ISO 527 1B durchgeführt.

**Tabelle 9a:**

| **Zugversuch/ Rezepturen basierend auf BioPBS^{™} FZ 91 PM + 15% CaCO₃** | Zugspannung bei Bruch in MPa |
|---|---|
| BioPBS^{™} FZ 91 PM + 15% CaCO₃ | 33,8 |
| + 10 % VINNEX^{®} 2504 | 29,5 |
| + 10 % VINNEX^{®} 2504+ 1 % GENIOPLAST^{®} Pellet S | 27,7 |
| + 10 % VINNEX^{®} 2525 | 33, 1 |
| + 10 % VINNEX^{®} 2525 + 1 % GENIOPLAST^{®} Pellet S | 31,7 |

| **Zugversuch/ Rezepturen basierend auf BioPBS^{™} FZ 91 PM + 15% CaCO₃** | Dehnung bei Bruch in % |
|---|---|
| BioPBS^{™} FZ 91 PM + 15% CaCO₃ | 11,4 |
| + 10 % VINNEX^{®} 2504 | 18,3 |
| + 10 % VINNEX^{®} 2504+ 1 % GENIOPLAST^{®} Pellet S | 33,7 |
| + 10 % VINNEX^{®} 2525 | 16,9 |
| + 10 % VINNEX^{®} 2525 + 1 % GENIOPLAST^{®} Pellet S | 18,7 |

**Tabelle 9b:**

| **Zugversuch/ Rezepturen basierend auf Ingeo^{™} PLA 4043 D** | Zugspannung bei Bruch in MPa |
|---|---|
| Ingeo^{™} 4043 D | 69, 9 |
| + 15 % VINNEX^{®} 2504 | 44,7 |
| + 15 % VINNEX^{®} 2504 + 1 % GENIOPLAST^{®} Pellet P Plus | 44,2 |
| + 10 % VINNEX^{®} 2525 | 69,3 |
| + 10 % VINNEX^{®} 2525 + 1 % GENIOPLAST^{®} Pellet P Plus | 65,4 |

| **Zugversuch/ Rezepturen basierend auf Ingeo^{™} PLA 4043 D** | Dehnung bei Bruch in % |
|---|---|
| Ingeo^{™} 4043 D | 2,5 |
| + 15 % VINNEX^{®} 2504 | 2,2 |
| + 15 % VINNEX^{®} 2504 + 1 % GENIOPLAST^{®} Pellet P Plus | 2,2 |
| + 10 % VINNEX^{®} 2525 | 2,4 |
| + 10 % VINNEX^{®} 2525 + 1 % GENIOPLAST^{®} Pellet P Plus | 2,3 |

Im Zugversuch erkennt man eine deutliche Verbesserung in der Bruchdehnung bei gefüllten Systemen. Hier hat sich eine Kombination aus Additiv (B) und (C), VINNEX^{®} und GENIOPLAST^{®}, bewährt.

### 4.9 Weiterreißversuch

Der Weiterreißversuch erfolgte an der Blasfolie mit der Winkelprobe nach DIN 53515 Ausgabe 01/1990 und nach Graves mit Einschnitt.

**Tabelle 10a:**

| **Weiterreißversuch/ Rezepturen basierend auf BioPBS^{™} FZ 91 PM +15% CaCO₃** | Längs F max. in N/mm |
|---|---|
| BioPBS^{™} FZ 91 PM + 15% CaCO₃ | 23,9 |
| + 10 % VINNEX^{®} 2525 | 20,9 |
| + 10 % VINNEX^{®} 2525 + 1 % GENIOPLAST^{®} Pellet S | 28,4 |

| **Weiterreißversuch/ Rezepturen basierend auf BioPBS^{™} FZ 91 PM +15% CaCO₃** | Quer F max. in N/mm |
|---|---|
| BioPBS^{™} FZ 91 PM + 15% CaCO₃ | 41,1 |
| + 10 % VINNEX^{®} 2525 | 25,7 |
| + 10 % VINNEX^{®} 2525 + 1 % GENIOPLAST^{®} Pellet S | 28, 0 |

**Tabelle 10b:**

| **Weitereißversuch/ Rezepturen basierend auf Ingeo^{™} PLA 4043 D** | Längs F max. in N/mm |
|---|---|
| Ingeo^{™} PLA 4043 D | 98,13 |
| + 15 % VINNEX^{®} 2504 | 115,0 |
| + 15 % VINNEX^{®} 2504 + 1 % GENIOPLAST^{®} Pellet P Plus | 119,7 |
| + 10 % VINNEX^{®} 2525 | 16, 0 |
| + 10 % VINNEX^{®} 2525 + 1 % GENIOPLAST^{®} Pellet P Plus | 77,7 |

| **Weiterreißversuch/ Rezepturen basierend auf Ingeo^{™} PLA 4043 D** | Quer F max. in N/mm |
|---|---|
| Ingeo^{™} PLA 4043 D | 90,37 |
| + 15 % VINNEX^{®} 2504 | 114,9 |
| + 15 % VINNEX^{®} 2504 + 1 % GENIOPLAST^{®} Pellet P Plus | 102,8 |
| + 10 % VINNEX^{®} 2525 | 128,2 |
| + 10 % VINNEX^{®} 2525 + 1 % GENIOPLAST^{®} Pellet P Plus | 132,4 |

Zusammenfassend wurden durch die erfindungsgemäße Zugabe von Additiv (B) und (C) zu den Biopolymeren folgende vorteilhafte Ergebnisse erzielt:

In der Verarbeitung, während der Compoundierung, konnte die maximale Reduzierung des Drehmoments und der Stromaufnahme unter Einsatz beider Additive in Erfahrung gebracht werden.

### Gleiteigenschaft:

Der Reibbeiwert wird mit Hilfe eines CoF Messgeräts ermittelt. Die Gleiteigenschaften konnten mit einer Kombination beider Additive verbessert werden. Die Kombination beider Additive (B) und (C) bewirkt einen synergistischen Effekt.

### Fließweg:

Bei anschließender Weiterverarbeitung mittels Spritzgussmaschine zeigte sich, dass Additiv (B) den Fließweg deutlich verlängert, Additiv (C) bringt einen zusätzlichen Boost Effekt.

### Schmelze-Massefließrate (MFR)

Das Verhalten der Schmelze-Massefließrate wird durch die Zugabe von Additiv (B) und (C) in PBS verbessert.

### Transparenz:

Es zeigt sich, dass die Transparenz an Spritzgussplatten durch Additiv (B) beeinflusst wird, die weitere Zugabe von Additiv (C) weist kaum eine zusätzliche Trübung auf.

### Kugelfalltest:

Der durchgeführte Kugelfalltest wies eine weniger stark beschädigte Oberfläche bei einer Kombination beider Additive (B) und (C) auf. Insbesondere die Zugabe von Additiv (C) verstärkt diesen Effekt.

### Abriebbeständigkeit:

Die Abriebbeständigkeit wird mit Hilfe eines Reibradtests gemessen. Je nach Additivtyp (B) wird der Abrieb reduziert oder sogar erhöht. Eine Zugabe von Additiv (C) gleicht diesen Effekt nahezu aus, bzw. reduziert den Abrieb. Dies trifft auf beide Kunststofftypen gleichermaßen zu. Die Kombination beider Additive (B) und (C) bewirkt einen synergistischen Effekt.

### Kratzertiefe:

Die Zugabe von Additiv (B) in PLA und PBS wirkt sich negativ auf die Kratzertiefe aus. Dies kann durch die Zugabe von Additiv (C) nicht nur ausgeglichen, sondern deutlich verbessert werden, d.h. eine Verbesserung der Kratzbeständigkeit wird erzielt, insbesondere bei einer höheren Dosierung von Additiv (C). Die Kombination beider Additive (B) und (C) bewirkt einen synergistischen Effekt.

### Zugversuch:

Im Zugversuch erkennt man eine deutliche Verbesserung in der Bruchdehnung bei gefüllten Systemen. Hier hat sich eine Kombination aus Additiv (B) und (C) bewährt.

Durch die Zugabe der erfindungsgemäßen Additive (B) und (C) werden durch synergistische Effekte die Oberflächeneigenschaften, wie Kratzbeständigkeit und Abriebbeständigkeit, die Mechanik und die Verarbeitung der Biokunststoffe verbessert.

## Patentansprüche

1. Zusammensetzungen enthaltend
(A) 65 bis 99,4 Gew.-% Biopolymere ausgewählt aus der Gruppe von
Polymilchsäure (PLA),
Polybutylensuccinat (PBS),
Polybutylensuccinat Adipat (PBSA),
Thermoplastische Stärke (TPS),
Polyhydroxyalkanoat (PHA),
Polybutylenadipat-Terephthalat (PBAT),
Polybutylensebacinat-Terephthalat (PBST),
Polyhydroxybutyrat (PHB),
Polycaprolacton (PCL),
Zellophan (CA)
und deren Mischungen
(B) 0,5 bis 30 Gew.-% Homopolymere, Copolymere oder Terpolymere auf Basis von Vinylacetat und
(C) 0,1 bis 5 Gew.-% Organopolysiloxangranulate enthaltend
(1) 100 Gew.-teile mindestens eines Polyorganosiloxans aus Einheiten der allgemeinen Formel
RᵣSiO_{(4-r/2)} (I)
wobei R gleich oder verschieden ist und einen substituierten oder unsubstituierten Kohlenwasserstoffrest und r 0, 1, 2 oder 3 bedeutet, mit der Maßgabe, dass der durchschnittliche Zahlenwert von r in einem Bereich von 1,9 bis 2,1 liegt,
(2) 1 bis 200 Gew.-teile eines verstärkenden oder nicht-verstärkenden Füllstoffs oder deren Gemische
(3) 0,01 bis 20 Gew.-teile eines Borsäure enthaltenden Additivs zur Herstellung des Granulats und
(4) gegebenenfalls weitere Hilfsstoffe ausgewählt aus der Gruppe von Verarbeitungshilfsmitteln, Weichmachern, Pigmenten und Stabilisatoren,
wobei die Organopolysiloxangranulate eine Teilchengröße von 1 bis 100 mm aufweisen,
mit der Maßgabe, dass die Gew.-% der Komponenten (A), (B) und (C) jeweils bezogen auf das Gesamtgewicht der Zusammensetzungen sind.

2. Zusammensetzungen nach Anspruch 1, **dadurch gekennzeichnet, dass** als Homopolymere, Copolymere oder Terpolymere auf Basis von Vinylacetat solche ausgewählt aus der Gruppe der Homopolymere aus Vinylacetat,
Copolymere aus Vinylacetat und Ethylen,
Copolymere aus Vinylacetat und Vinyllaurat,
Terpolymere aus Vinylacetat, Ethylen und Versaticsäureester,
Terpolymere aus Vinylacetat, Ethylen und Acrylat,
Terpolymere aus Vinylacetat, Vinyllaurat und Acrylat und deren Mischungen eingesetzt werden.

3. Zusammensetzungen nach Anspruch 1 oder 2, **dadurch gekennzeichnet, dass** die Polyorganosiloxane (1) Diorganopolysiloxane sind, die als Endgruppen Trialkylsiloxygruppen, Trimethylsiloxygruppen, Dimethylhydroxylsiloxygruppen oder Dimethylvinylsiloxygruppen aufweisen.

4. Zusammensetzungen nach Anspruch 1, 2 oder 3, **dadurch gekennzeichnet, dass** die Polyorganosiloxane (1) eine Viskosität von 1.000.000 bis 100.000.000 mm²/s bei 25°C, bestimmt gemäß DIN 1342-2, Ausgabe 2003-11, aufweisen.

5. Verfahren zur Herstellung der Zusammensetzungen nach Anspruch 1 durch Vermischen von
(A) 65 bis 99,4 Gew.-% Biopolymere ausgewählt aus der Gruppe von
Polymilchsäure (PLA),
Polybutylensuccinat (PBS),
Polybutylensuccinat Adipat (PBSA),
Thermoplastische Stärke (TPS),
Polyhydroxyalkanoat (PHA),
Polybutylenadipat-Terephthalat (PBAT),
Polybutylensebacinat-Terephthalat (PBST),
Polyhydroxybutyrat (PHB),
Polycaprolacton (PCL),
Zellophan (CA)
und deren Mischungen
mit
(B) 0,5 bis 30 Gew.-% Homopolymere, Copolymere oder Terpolymere auf Basis von Vinylacetat und
(C) 0,1 bis 5 Gew.-% Organopolysiloxangranulate enthaltend
(1) 100 Gew.-teile mindestens eines Polyorganosiloxans aus Einheiten der allgemeinen Formel
RᵣSiO_{(4-r/2)} (I)
wobei R gleich oder verschieden ist und einen substituierten oder unsubstituierten Kohlenwasserstoffrest und r 0, 1, 2 oder 3 bedeutet, mit der Maßgabe, dass der durchschnittliche Zahlenwert von r in einem Bereich von 1,9 bis 2,1 liegt,
(2) 1 bis 200 Gew.-teile eines verstärkenden oder nicht-verstärkenden Füllstoffs oder deren Gemische
(3) 0,01 bis 20 Gew.-teile eines Borsäure enthaltenden Additivs zur Herstellung des Granulats und
(4) gegebenenfalls weitere Hilfsstoffe ausgewählt aus der Gruppe von Verarbeitungshilfsmitteln, Weichmachern, Pigmenten und Stabilisatoren,
wobei die Organopolysiloxangranulate eine Teilchengröße von 1 bis 100 mm aufweisen,
mit der Maßgabe, dass die Gew.-% der Komponenten (A), (B) und (C) jeweils bezogen auf das Gesamtgewicht der Zusammensetzungen sind.

6. Verfahren nach Anspruch 5, **dadurch gekennzeichnet, dass** als Homopolymere, Copolymere oder Terpolymere auf Basis von Vinylacetat solche ausgewählt aus der Gruppe der
Homopolymere aus Vinylacetat,
Copolymere aus Vinylacetat und Ethylen,
Copolymere aus Vinylacetat und Vinyllaurat,
Terpolymere aus Vinylacetat, Ethylen und Versaticsäureester,
Terpolymere aus Vinylacetat, Ethylen und Acrylat,
Terpolymere aus Vinylacetat, Vinyllaurat und Acrylat und deren Mischungen eingesetzt werden.

7. Verfahren nach Anspruch 5 oder 6, **dadurch gekennzeichnet, dass** die Polyorganosiloxane (1) Diorganopolysiloxane sind, die als Endgruppen Trialkylsiloxygruppen, Trimethylsiloxygruppen, Dimethylhydroxylsiloxygruppen oder Dimethylvinylsiloxygruppen aufweisen.

8. Verfahren nach Anspruch 5, 6 oder 7, **dadurch gekennzeichnet, dass** die Polyorganosiloxane (1) aus Einheiten der Formel (I) eine Viskosität von 1.000.000 bis 100.000.000 mm²/s bei 25°C, bestimmt gemäß DIN 1342-2, Ausgabe 2003-11, aufweisen.

## Claims

1. Compositions comprising
(A) 65% to 99.4% by weight of biopolymers selected from the group consisting of
polylactic acid (PLA),
polybutylene succinate (PBS),
polybutylene succinate adipate (PBSA),
thermoplastic starch (TPS),
polyhydroxyalkanoate (PHA),
polybutylene adipate terephthalate (PBAT),
polybutylene sebacate terephthalate (PBST),
polyhydroxybutyrate (PHB),
polycaprolactone (PCL),
cellophane (CA),
and mixtures thereof,
(B) 0.5% to 30% by weight of homopolymers, copolymers or terpolymers based on vinyl acetate, and
(C) 0.1% to 5% by weight of organopolysiloxane pellets comprising
(1) 100 parts by weight of at least one polyorganosiloxane composed of units of general formula
RᵣSiO_{(4-r/2)} (I)
where R is identical or different and is a substituted or unsubstituted hydrocarbon radical and r is 0, 1, 2 or 3, with the proviso that the average numerical value of r is within a range from 1.9 to 2.1,
(2) 1 to 200 parts by weight of a reinforcing or non-reinforcing filler or mixtures thereof,
(3) 0.01 to 20 parts by weight of a boric acid-containing additive for the production of the pellet material, and
(4) optionally further auxiliaries selected from the group of processing aids, plasticizers, pigments, and stabilizers,
the organopolysiloxane pellets having a particle size of 1 to 100 mm,
with the proviso that the contents of components (A), (B), and (C) in % by weight are in each case based on the total weight of the compositions.

2. Compositions according to Claim 1, **characterized in that** the vinyl acetate-based homopolymers, copolymers or terpolymers employed are ones selected from the group comprising
vinyl acetate homopolymers,
copolymers of vinyl acetate and ethylene,
copolymers of vinyl acetate and vinyl laurate,
terpolymers of vinyl acetate, ethylene, and versatic ester,
terpolymers of vinyl acetate, ethylene, and acrylate,
terpolymers of vinyl acetate, vinyl laurate, and acrylate,
and mixtures thereof.

3. Compositions according to Claim 1 or 2, **characterized in that** the polyorganosiloxanes (1) are diorganopolysiloxanes having trialkylsiloxy groups, trimethylsiloxy groups, dimethylhydroxysiloxy groups or dimethylvinylsiloxy groups as end groups.

4. Compositions according to Claim 1, 2 or 3, **characterized in that** the polyorganosiloxanes (1) have a viscosity at 25°C of from 1 000 000 to 100 000 000 mm²/s, determined in accordance with DIN 1342-2, version 2003-11.

5. Process for producing the compositions according to Claim 1 by mixing
(A) 65% to 99.4% by weight of biopolymers selected from the group consisting of
polylactic acid (PLA),
polybutylene succinate (PBS),
polybutylene succinate adipate (PBSA),
thermoplastic starch (TPS),
polyhydroxyalkanoate (PHA),
polybutylene adipate terephthalate (PBAT),
polybutylene sebacate terephthalate (PBST),
polyhydroxybutyrate (PHB),
polycaprolactone (PCL),
cellophane (CA),
and mixtures thereof,
with
(B) 0.5 to 30% by weight of homopolymers, copolymers or terpolymers based on vinyl acetate, and
(C) 0.1% to 5% by weight of organopolysiloxane pellets comprising
(1) 100 parts by weight of at least one polyorganosiloxane composed of units of general formula
RᵣSiO_{(4-r/2)} (I)
where R is identical or different and is a substituted or unsubstituted hydrocarbon radical and r is 0, 1, 2 or 3, with the proviso that the average numerical value of r is within a range from 1.9 to 2.1,
(2) 1 to 200 parts by weight of a reinforcing or non-reinforcing filler or mixtures thereof,
(3) 0.01 to 20 parts by weight of a boric acid-containing additive for the production of the pellet material, and
(4) optionally further auxiliaries selected from the group of processing aids, plasticizers, pigments, and stabilizers,
the organopolysiloxane pellets having a particle size of 1 to 100 mm,
with the proviso that the contents of components (A), (B), and (C) in % by weight are in each case based on the total weight of the compositions.

6. Process according to Claim 5, **characterized in that** the vinyl acetate-based homopolymers, copolymers or terpolymers employed are ones selected from the group comprising
vinyl acetate homopolymers,
copolymers of vinyl acetate and ethylene,
copolymers of vinyl acetate and vinyl laurate,
terpolymers of vinyl acetate, ethylene, and versatic ester,
terpolymers of vinyl acetate, ethylene, and acrylate,
terpolymers of vinyl acetate, vinyl laurate, and acrylate,
and mixtures thereof.

7. Process according to Claim 5 or 6, **characterized in that** the polyorganosiloxanes (1) are diorganopolysiloxanes having trialkylsiloxy groups, trimethylsiloxy groups, dimethylhydroxysiloxy groups or dimethylvinylsiloxy groups as end groups.

8. Process according to Claim 5, 6 or 7, **characterized in that** the polyorganosiloxanes (1) composed of units of formula (I) have a viscosity at 25°C of from 1 000 000 to 100 000 000 mm²/s, determined in accordance with DIN 1342-2, version 2003-11.

## Revendications

1. Compositions contenant
(A) 65 à 99,4% en poids de biopolymères choisis dans le groupe constitué par
le poly(acide lactique) (PLA),
le poly(succinate de butylène) (PBS),
le poly(succinate-adipate de butylène) (PBSA),
l'amidon thermoplastique (TPS),
le poly(hydroxyalcanoate) (PHA),
le poly(adipate-téréphtalate de butylène) (PBAT),
le poly(sébacinate-téréphtalate de butylène) (PBST),
le polyhydroxybutyrate (PHB),
le polycaprolactone (PCL),
le cellophane (CA)
et leurs mélanges
(B) 0,5 à 30% en poids d'homopolymères, de copolymères ou de terpolymères à base d'acétate de vinyle et
(C) 0,1 à 5% en poids de granulats d'organopolysiloxane contenant
(1) 100 parties en poids d'au moins un polyorganosiloxane constitué par des motifs de formule générale
RᵣSiO_{(4-r/2)} (I)
dans laquelle R est identique ou différent et signifie un radical hydrocarboné substitué ou non substitué et r signifie 0, 1, 2 ou 3, étant entendu que la valeur numérique moyenne de r se situe dans une plage de 1,9 à 2,1,
(2) 1 à 200 parties en poids d'une charge renforçante ou non renforçante ou des mélanges correspondants
(3) 0,01 à 20 parties en poids d'un additif contenant de l'acide borique pour la fabrication du granulat et
(4) le cas échéant d'autres adjuvants choisis dans le groupe constitué par les adjuvants de mise en oeuvre, les plastifiants, les pigments et les stabilisants,
les granulats d'organopolysiloxane présentant une grosseur de particule de 1 à 100 mm,
étant entendu que les % en poids des composants (A), (B) et (C) se rapportent à chaque fois au poids total des compositions.

2. Compositions selon la revendication 1, **caractérisées**
**en ce qu'**on utilise, comme homopolymères, copolymères ou terpolymères à base d'acétate de vinyle ceux choisis dans le groupe
des homopolymères d'acétate de vinyle,
des copolymères d'acétate de vinyle et d'éthylène,
des copolymères d'acétate de vinyle et de laurate de vinyle,
des terpolymères d'acétate de vinyle, d'éthylène et d'esters de l'acide versatique,
des terpolymères d'acétate de vinyle, d'éthylène et d'acrylate,
des terpolymères d'acétate de vinyle, de laurate de vinyle et d'acrylate,
et leurs mélanges.

3. Compositions selon la revendication 1 ou 2, **caractérisées en ce que** les polyorganosiloxanes (1) sont des diorganopolysiloxanes, qui présentent, comme groupes terminaux, des groupes trialkylsiloxy, des groupes triméthylsiloxy, des groupes diméthylhydroxysiloxy ou des groupes diméthylvinylsiloxy.

4. Compositions selon la revendication 1, 2 ou 3, **caractérisées en ce que** les polyorganosiloxanes (1) présentent une viscosité de 1.000.000 à 100.000.000 mm²/s à 25°C, déterminée selon la norme DIN 1342-2, édition 2003-11.

5. Procédé pour la préparation des compositions selon la revendication 1, par mélange de
(A) 65 à 99,4% en poids de biopolymères choisis dans le groupe constitué par
le poly(acide lactique) (PLA),
le poly(succinate de butylène) (PBS),
le poly(succinate-adipate de butylène) (PBSA),
l'amidon thermoplastique (TPS),
le poly(hydroxyalcanoate) (PHA),
le poly(adipate-téréphtalate de butylène) (PBAT),
le poly(sébacinate-téréphtalate de butylène) (PBST),
le polyhydroxybutyrate (PHB),
le polycaprolactone (PCL),
le cellophane (CA)
et leurs mélanges avec
(B) 0,5 à 30% en poids d'homopolymères, de copolymères ou de terpolymères à base d'acétate de vinyle et
(C) 0,1 à 5% en poids de granulats d'organopolysiloxane contenant
(1) 100 parties en poids d'au moins un polyorganosiloxane constitué par des motifs de formule générale
RᵣSiO_{(4-r/2)} (I)
dans laquelle R est identique ou différent et signifie un radical hydrocarboné substitué ou non substitué et r signifie 0, 1, 2 ou 3, étant entendu que la valeur numérique moyenne de r se situe dans une plage de 1,9 à 2,1,
(2) 1 à 200 parties en poids d'une charge renforçante ou non renforçante ou des mélanges correspondants
(3) 0,01 à 20 parties en poids d'un additif contenant de l'acide borique pour la fabrication du granulat et
(4) le cas échéant d'autres adjuvants choisis dans le groupe constitué par les adjuvants de mise en oeuvre, les plastifiants, les pigments et les stabilisants,
les granulats d'organopolysiloxane présentant une grosseur de particule de 1 à 100 mm,
étant entendu que les % en poids des composants (A), (B) et (C) se rapportent à chaque fois au poids total des compositions.

6. Procédé selon la revendication 5, **caractérisé en ce qu'**on utilise, comme homopolymères, copolymères ou terpolymères à base d'acétate de vinyle ceux choisis dans le groupe
des homopolymères d'acétate de vinyle,
des copolymères d'acétate de vinyle et d'éthylène,
des copolymères d'acétate de vinyle et de laurate de vinyle,
des terpolymères d'acétate de vinyle, d'éthylène et d'esters de l'acide versatique,
des terpolymères d'acétate de vinyle, d'éthylène et d'acrylate,
des terpolymères d'acétate de vinyle, de laurate de vinyle et d'acrylate,
et leurs mélanges.

7. Procédé selon la revendication 5 ou 6, **caractérisé en ce que** les polyorganosiloxanes (1) sont des diorganopolysiloxanes, qui présentent, comme groupes terminaux, des groupes trialkylsiloxy, des groupes triméthylsiloxy, des groupes diméthylhydroxysiloxy ou des groupes diméthylvinylsiloxy.

8. Procédé selon la revendication 5, 6 ou 7, **caractérisé en ce que** les polyorganosiloxanes (1) constitués par des motifs de formule (I) présentent une viscosité de 1.000.000 à 100.000.000 mm²/s à 25°C, déterminée selon la norme DIN 1342-2, édition 2003-11.
